# EUROPÄISCHE PATENTSCHRIFT

(11) **EP 2 699 823 B1**
(45) Veröffentlichungstag und Bekanntmachung des Hinweises auf die Patenterteilung: **02.03.2016**
(21) Anmeldenummer: 12719572.5
(22) Anmeldetag: 18.04.2012
(51) Int. Cl.: F16H 47/08, F16H 37/08

(54) **VORRICHTUNG ZUR KRAFTÜBERTRAGUNG**
DEVICE FOR TRANSMITTING FORCE
DISPOSITIF POUR LA TRANSMISSION DE FORCE

(30) Priorität: 19.04.2011 DE 102011018236
(43) Veröffentlichungstag der Anmeldung: 26.02.2014
(73) Patentinhaber: Voith Patent GmbH, 89522 Heidenheim (DE)
(72) Erfinder: GRAF, Hartmut, 73660 Urbach (DE)
(74) Vertreter: Dr. Weitzel & Partner
(86) Internationale Anmeldenummer: PCT/EP2012/001669
(87) Internationale Veröffentlichungsnummer: WO 2012/143123

(56) Entgegenhaltungen:
- WO-A2-95/01522
- CH-A- 218 243
- DE-A1- 3 441 877
- DE-A1- 10 152 488

## Beschreibung

Die Erfindung betrifft eine Vorrichtung zur Kraftübertragung nach der im Oberbegriff nach Anspruch 1 näher definierten Art.

Aus der gattungsgemäßen DE 34 41 877 A1 ist ein Kraftübertragungsaggregat zum Antrieb einer drehzahlvariablen Arbeitsmaschine bekannt. Dieses Kraftübertragungsaggregat besteht aus einem Getriebe mit Planetengetrieben, wobei ein Leistungszweig in einen mechanischen und einen hydrodynamischen Leistungszweig aufgeteilt wird. Der hydrodynamische Leistungszweig verläuft über einen hydrodynamischen Wandler und ist durch den Wandler in seiner Drehzahl regelbar. Dieser wird mit dem mechanisch übertragenen Leistungszweig in einem Planetengetriebe wieder vereint und treibt so die Arbeitsmaschine mit der gewünschten Drehzahl an, obwohl das Antriebsaggregat, welches das Kraftübertragungsaggregat an der Eingangswelle antreibt, mit konstanter Drehzahl läuft. Der in der genannten deutschen Schrift beschriebene Aufbau mit den konzentrisch verlaufenden Wellen ist dabei gegenüber Aufbauten mit nicht konzentrisch verlaufenden Wellen vergleichsweise platzsparend zu realisieren. Allerdings erfordert er eine Koppelhülse beziehungsweise eine Hohlwelle sowie ein Standgetriebe zum Aufteilen der Leistungszweige. Dies macht den Aufbau vergleichsweise schwer und insbesondere die Verwendung der Koppelhülse mit dem vergleichsweise großen Durchmesser des Hohlrads des Planetengetriebes macht den Aufbau relativ teuer. Außerdem muss ein Großteil des Kraftübertragungsaggregats im Inneren dieser Koppelhülse montiert werden, wodurch im Schadensfall, zu Reparaturzwecken oder dergleichen die Zugänglichkeit sehr schlecht ist.

Basierend auf diesem Aufbau beschreibt die DE 10 2008 034 607 einen ähnlichen Aufbau, welcher die Hohlwelle durch parallel zur zentralen Achse des Kraftübertragungsaggregats verlaufende Koppelwellen ersetzt. Damit kann die aufwändige, teure und sehr schwere Koppelhülse eingespart werden. Allerdings ist der Aufbau immer noch vergleichsweise groß und durch die außenliegenden parallelen Übertragungswellen, welche über geeignete Getriebe mit der Hauptwelle verbunden sein müssen, vergleichsweise aufwändig und erfordern eine Vielzahl von einzelnen Bauteilen. Dies macht die Herstellung und die Montage teuer und aufwändig.

Ferner wird auf Antriebsstränge auf dem Gebiet der Kraftfahrzeugtechnik verwiesen. Hier sind Gegenlaufwandler in Kombination mit Planetengetrieben beschrieben. Beispielsweise in der DE 41 02 493 A1 oder der EP 2 101 084 A2. Der Aufbau ist entsprechend komplex, da hier die Aufgabenstellung eine gänzlich andere ist, nämlich eine variable Eingangsdrehzahl entsprechend den Anforderungen in eine geeignete Gangstufe/Übersetzung umzusetzen. Eine variable geregelte Ausgangsdrehzahl spielt hierbei keine Rolle.

Ähnlich wie in der zuerst genannten Schrift ist auch in der WO 95/01522 A2 ein entsprechendes Kraftübertragungsaggregat zum Antrieb einer drehzahlvariablen Arbeitsmaschine mit einer drehzahlkonstanten Antriebsmaschine bekannt. Über einen hydrodynamischen Gleichlaufwandler wird dabei eine entsprechende Drehzahlanpassung vorgenommen.

Zum weiteren allgemeinen Stand der Technik wird auf die CH 218 243 A sowie die DE 101 52 488 A1 verwiesen. Beide Schriften stammen aus dem Bereich der Fahrzeugtechnik und dienen dazu, über ein drehzahlvariables Antriebsaggregat ein Drehmoment so umzuwandeln, dass beispielsweise das annähernd konstante Drehmoment des Antriebsaggregats in einem insbesondere zum Anfahren des Fahrzeugs geeigneten Drehmoment resultiert. Der Aufbau aus dem Bereich der Fahrzeugtechnik verwendet dabei, wie dort durchaus üblich, Gegenlaufwandler als hydrodynamische Wandler im Antriebsstrang.

Aufgabe der vorliegenden Erfindung ist es daher, eine Vorrichtung zur Kraftübertragung von einem mit konstanter Drehzahl laufenden Antriebsaggregat auf eine mit variabler Drehzahl laufende Arbeitsmaschine anzugeben, welches einfach, klein, leicht sowie kostengünstig in der Herstellung und bei der Montage ist.

Erfindungsgemäß wird diese Aufgabe durch die im kennzeichnenden Teil von Anspruch 1 genannten Merkmale gelöst. Weitere vorteilhafte Ausgestaltungen und bevorzugte Lösungsvarianten sind in den hiervon abhängigen Unteransprüchen beschrieben.

Die erfindungsgemäße Vorrichtung nutzt anstelle der bisher üblichen hydrodynamischen Gleichlaufwandler einen hydrodynamischen Gegenlaufwandler. Dieser ist zwar hinsichtlich des Wirkungsgrads etwas schlechter als ein Gleichlaufwandler, er erlaubt jedoch einen sehr einfachen und kompakten Aufbau der Vorrichtung. Da nur ein gewisser Teil der Leistung über den hydrodynamischen Wandler übertragen wird und der größere Teil der Leistung ohnehin direkt mechanisch übertragen wird, ergibt sich aus dem Wirkungsgradnachteil des Gegenlaufwandlers gegenüber einem Gleichlaufwandler keine nennenswerte Einschränkung. Die erfindungsgemäße Vorrichtung kann vielmehr einfach und kompakt aufgebaut werden. Die Möglichkeit des kompakten Aufbaus resultiert insbesondere in der direkten Anbindung sowohl des Turbinenrads als auch des Pumpenrads an entsprechende Elemente des Planetengetriebes. Unter einer direkten Anbindung im Sinne der hier vorliegenden Erfindung ist dabei eine direkte mechanische Verbindung ohne zwischengeschaltete Bauteile wie Kupplungen, Getriebeelemente öder dergleichen zu verstehen.

Erfindungsgemäß ist es dabei vorgesehen, dass das erste Element der Planetenträger des Planetengetriebes ist, während das zweite Element das Sonnenrad des Planetengetriebes ist und das dritte Element das Hohlrad des Planetengetriebes ist. Dieser Aufbau, bei welchem das Hohlrad mit der Ausgangswelle direkt oder über ein weiteres Getriebe, vorzugsweise ein Stirnradgetriebe, verbunden ist und bei welchem der hydrodynamische Leistungszweig über das Sonnenrad eingetragen wird, hat dabei den entscheidenden Vorteil, dass das Planetengetriebe aufgrund der günstigen Drehzahlen sehr kompakt ausgeführt werden kann.

Die Vorrichtung erhält so einen sehr kompakten Aufbau, welcher auf eine Koppelhülse verzichten kann. Er kann außerdem auf zusätzliche Standgetriebe in Form von Planetengetrieben verzichten und kann so sehr klein, kompakt mit einer geringen Anzahl von Bauteilen und dementsprechend einfach und kostengünstig in der Herstellung und der Montage ausgeführt werden. Der Aufbau kann dabei gemäß einer vorteilhaften Weiterbildung mit genau einem Planetengetriebe ausgeführt sein, sodass auf weitere vergleichsweise aufwändige Planetengetriebe verzichtet werden kann.

Gemäß einer vorteilhaften Weiterbildung der erfindungsgemäßen Vorrichtung ist es ferner vorgesehen, dass die Turbine des hydrodynamischen Gegenlaufwandlers über eine Hohlwelle mit dem Sonnenrad des Planetengetriebes verbunden ist und die durch die Hohlwelle verlaufende Eingangswelle auf der dem hydrodynamischen Gegenlaufwandler abgewandten Seite mit dem Planetenträger verbunden ist. Dies ermöglicht einen sehr kompakten Aufbau, welcher sich sehr platzsparend realisieren lässt. Die Hohlwelle gemäß diesem Aufbau ist dabei von vergleichsweise kleinem Durchmesser und bei weitem nicht so aufwendig und komplex, wie es beispielsweise die Koppelhülse beim Aufbau gemäß dem Stand der Technik ist.

In einer besonders günstigen Weiterbildung hiervon ist es dann vorgesehen, dass das Hohlrad des Planetengetriebes auf der dem hydrodynamischen Gegenlaufwandler abgewandten Seite zumindest mittelbar mit der Ausgangswelle verbunden ist. Der Aufbau lässt sich ebenfalls einfach und kompakt realisieren, wobei die Lagerung des Planetengetriebes beziehungsweise eines seiner Elemente so realisiert werden kann, dass keine oder keine nennenswerten axialen Kräfte auf die Elemente des Planetengetriebes einwirken. In einer entsprechend vorteilhaften Weiterbildung kann es daher vorgesehen sein, dass die Elemente des Planetengetriebes einfach-schrägverzahnt ausgestaltet sind.

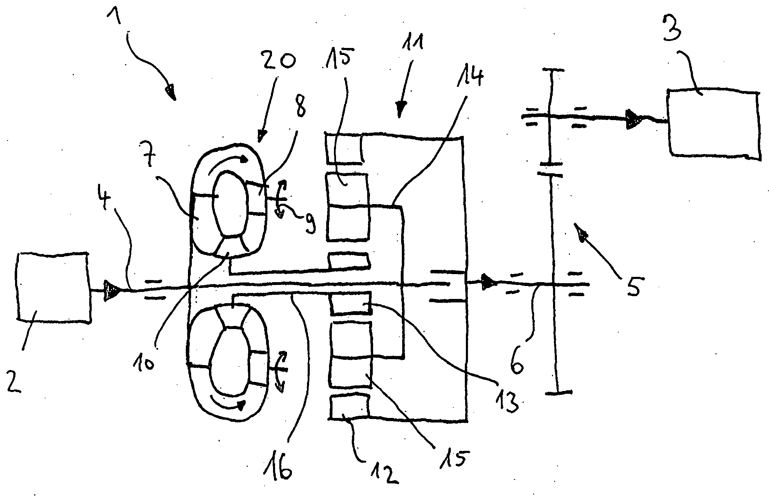

Weitere vorteilhafte Ausgestaltungen der erfindungsgemäßen Vorrichtung ergeben sich außerdem aus den restlichen abhängigen Unteransprüchen und werden anhand des Ausführungsbeispiels deutlich, welches nachfolgend unter Bezugnahme auf die Figur näher beschrieben wird.

In der einzigen beigefügten Figur ist eine schematische Darstellung einer Vorrichtung gemäß der Erfindung zu erkennen.

In der einzigen beigefügten Figur ist eine Vorrichtung 1, zur Kraftübertragung dargestellt, welche ein Antriebsaggregat 2 und eine Arbeitsmaschine 3 miteinander verbindet. Das Antriebsaggregat 2 kann dabei insbesondere als Motor, besonders bevorzugt als Elektromotor ausgebildet sein. Dies liefert bei dem hier dargestellten Aufbau typischerweise eine konstante Drehzahl, mit welcher es eine direkt oder gegebenenfalls auch über eine nicht dargestellte Getriebestufe mit diesem verbundene Eingangswelle 4 antreibt. Über die Vorrichtung 1 wird dann die Arbeitsmaschine 3 angetrieben, welche als Arbeitsmaschine 3 mit variabler Drehzahl ausgebildet ist. Die Arbeitsmaschine 3 kann insbesondere ein Verdichter beziehungsweise ein Kompressor, eine Kreiselpumpe oder Ähnliches sein. Sie ist in dem hier dargestellten Ausführungsbeispiel über ein Stirnradgetriebe 5 mittelbar mit einer Ausgangswelle 6 verbunden. Eine Verbindung über ein Planetengetriebe, Kegelradgetriebe oder Ähnliches wäre ebenso denkbar. Die Vorrichtung 1 zur Kraftübertragung selbst besteht nun aus einem hydrodynamischen Gegenlaufwandler 20, dessen Pumpenrad 7 unmittelbar mit der Eingangswelle 4 verbunden ist. Wie für einen Gegenlaufwandler 20 typisch, entsteht eine Strömung des Arbeitsmediums von dem Pumpenrad 7 über ein Leitrad 8, welches, wie durch den Pfeil 9 gekennzeichnet, verstellbar ausgeführt ist, auf ein Turbinenrad 10. Parallel dazu wird die Leistung über die Eingangswelle 4 mechanisch direkt übertragen. Die beiden Leistungszweige werden dann durch ein Planetengetriebe 11 wieder zusammengeführt und gelangen gemeinsam in den Bereich der Ausgangswelle 6.

Das Planetengetriebe 11 ist hierfür als sogenanntes "D-Getriebe" ausgeführt. Es weist ein Hohlrad 12, ein Sonnenrad 13 sowie mehrere auf einem Planetenträger 14 angeordnete Planeten 15 auf. Bei dem hier dargestellten Aufbau wird nun das Turbinenrad 10 des hydrodynamischen Gegenlaufwandlers 20 über eine Hohlwelle 16 mit dem Sonnenrad 13 des Planetengetriebes 11 direkt verbunden. Durch die Hohlwelle 16 hindurch ist die Eingangswelle 4 auf der dem Gegenlaufwandler 20 abgewandten Seite des Planetengetriebes 11 mit dem Planetenträger 14 und damit mit den einzelnen umlaufenden Planeten 15 verbunden. Die Ausgangswelle 6 ist wiederum mit dem Hohlrad 12 des Planetengetriebes 11 verbunden.

Entsprechend der gewünschten Drehzahl der Ausgangswelle 6 wird nun durch eine Einstellung des Leitrads 8 und/oder des Füllgrads des hydrodynamischen Gegenlaufwandlers 20 mit Arbeitsmedium eine entsprechende Leistungsübertragung in dem hydrodynamischen Leistungszweig und damit von der Eingangswelle 4 auf das Sonnenrad 13 erreicht. Diese über den hydrodynamischen Leistungszweig übertragene Leistung wird dann mit dem über die Planetenträger 14 eingetragenen Hauptteil der Leistung, welche direkt mechanisch übertragen wird, summiert und gelangt als gemeinsame Leistung über das Hohlrad 12 zur Ausgangswelle 6. In dem hier dargestellten Fall wird die Arbeitsmaschine 3 dann über das Stirnradgetriebe 5 mit konstanter Übersetzung angetrieben. Je nach gewünschter momentaner Drehzahl im Bereich der Arbeitsmaschine 3 wird der hydrodynamische Gegenlaufwandler 20 entsprechend verstellt, indem das Leitrad 8 verstellt und/oder die Menge an Arbeitsmedium in dem hydrodynamischen Gegenlaufwandler 20 variiert wird. Dadurch wird eine sehr gute Regelbarkeit der Ausgangsdrehzahl auf den gewünschten Drehzahlwert erzielt.

Der Aufbau lässt sich dabei außerordentlich kompakt und entsprechend leicht realisieren, da kein Standgetriebe benötigt wird, keine Koppelhülse verwendet werden muss und da aufgrund der sehr günstigen Drehzahlen ein vergleichsweise kleines Planetengetriebe 11 eingesetzt werden kann. Aufgrund der Möglichkeiten zur Lagerung insbesondere der Eingangswelle 4 auf der Ausgangswelle 6 entsteht ein Aufbau, welcher keine oder keine nennenswerten Kräfte in axialer Richtung auf die einzelnen Elemente 12, 13, 15 des Planetengetriebes 11 verursacht. Damit ist es möglich, die einzelnen Elemente 12, 13, 15 des Planetengetriebes 11 in einfacher Schrägverzahnung auszuführen, sodass diese nicht nur aufgrund ihrer Baugröße, sondern auch aufgrund ihrer Bauart vergleichsweise einfach und kostengünstig realisiert werden können.

Der Aufbau ist insgesamt sehr kompakt, leicht und kann aufgrund der vergleichsweise geringen Anzahl an Einzelelementen einfach und kostengünstig hergestellt und montiert werden.

## Patentansprüche

1. Vorrichtung (1) zur Kraftübertragung mit einer mit einem Antriebsaggregat (2) mit konstanter Drehzahl zumindest mittelbar verbundenen Eingangswelle (4), mit einer mit einer Arbeitsmaschine (3) mit variabler Drehzahl zumindest mittelbar verbundenen Ausgangswelle (6), mit einem hydrodynamischen Wandler (20) und mit
einem als Planetengetriebe (11) ausgebildeten Überlagerungsgetriebe, umfassend ein Hohlrad (12), ein Sonnenrad (13) sowie einen Planetenträger (14) mit mehreren Planeten (15) als Elemente des Planetengetriebes (11), wobei
die Eingangswelle (4) mit einem Pumpenrad (7) des hydrodynamischen Wandlers (20) und einem ersten Element (14) des Planetengetriebes (11) direkt verbunden ist,
ein Turbinenrad (10) des hydrodynamischen Wandlers (20) direkt mit einem zweiten Element (13) des Planetengetriebes verbunden ist, und
die Ausgangswelle (6) mit einem dritten Element (12) des Planetengetriebes (11) verbunden ist;
**dadurch gekennzeichnet, dass**
der hydrodynamische Wandler (20) als Gegenlaufwandler ausgebildet ist; und dass
das erste Element der Planetenträger (14) des Planetengetriebes (11) ist, das zweite Element das Sonnenrad (13) des Planetengetriebes (11) ist und das dritte Element das Hohirad (12) des Planetengetriebes (11) ist.

2. Vorrichtung (1) nach Anspruch 1, **dadurch gekennzeichnet, dass** genau ein Planetengetriebe (11) vorgesehen ist.

3. Vorrichtung (1) nach Anspruch 1 oder 2, **dadurch gekennzeichnet, dass** zwischen dem Planetengetriebe (11) und der Arbeitsmaschine (3) ein Getriebe (5) vorgesehen ist.

4. Vorrichtung (1) nach einem der Ansprüche 1 bis 3, **dadurch gekennzeichnet, dass** das Turbinenrad (10) über eine Hohlwelle (16) mit dem Sonnenrad (13) verbunden ist und die durch die Hohlwelle (16) verlaufende Eingangswelle (4) auf der dem hydrodynamischen Wandler (20) abgewandten Seite des Planetengetriebes (11) mit dem Planetenträger (14) verbunden ist.

5. Vorrichtung (1) nach einem der Ansprüche 1 bis 4, **dadurch gekennzeichnet, dass** das Hohlrad (12) auf der dem hydrodynamischen Wandler (20) abgewandten Seite des Planetengetriebes zumindest mittelbar mit der Ausgangswelle (6) verbunden ist.

6. Vorrichtung (1) nach einem der Ansprüche 1 bis 5, **dadurch gekennzeichnet, dass** das Hohlrad (12), die Planeten (15) und das Sonnenrad (13) einfach schrägverzahnt ausgeführt sind.

7. Vorrichtung (1) nach einem der Ansprüche 1 bis 6, **dadurch gekennzeichnet, dass** das Antriebsaggregat (2) als Elektromotor ausgebildet ist.

8. Vorrichtung (1) nach einem der Ansprüche 1 bis 7, **dadurch gekennzeichnet, dass** die Arbeitsmaschine (3) als Fördereinrichtung für ein Fluid, insbesondere als Verdichter, Pumpe oder Kreiselpumpe, ausgebildet ist.

## Claims

1. A device (1) for transmitting force from an input shaft (4), which is connected at least indirectly to a drive assembly (2) having constant speed, to an output shaft (6), which is connected at least indirectly to a work machine (3) having variable speed, having
a hydrodynamic converter (20); and
a superimposed transmission, implemented as a planetary gearing (11), comprising a ring gear (12), a sun wheel (13), and a planet carrier (14) having a plurality of planet gears (15) as elements of the planetary gearing (11),
the input shaft (4) is directly connected to a pump wheel (7) of the hydrodynamic converter (20) and a first element (13) of the planetary gearing (11),
a turbine wheel (10) of the hydrodynamic converter (20) is directly connected to a second element (13) of the planetary gearing, and
the output shaft (6) is connected to a third element (12) of the planetary gearing (11); **characterized in that**
the hydrodynamic converter (20) is implemented as a counterrotating converter; and the first element is the planet carrier (14) of the planetary gearing (11), the second element is the sun wheel (13) of the planetary gearing (11), and the third element is the ring gear (12) of the planetary gearing (11).

2. The device (1) according to Claim 1, **characterized in that** precisely one planetary gearing (11) is provided.

3. The device (1) according to Claim 1 or 2 , **characterized in that** a gearing (5) is provided between the planetary gearing (11) and the work machine (3).

4. The device (1) according to one of Claims 1 to 3, **characterized in that** the turbine wheel (10) is connected via a hollow shaft (16) to the sun wheel (13), and the input shaft (4) extending through the hollow shaft (16) is connected, on the side of the planetary gearing (11) facing away from the hydrodynamic converter (20), to the planet carrier (14).

5. The device (1) according to one of Claims 1 to 4, **characterized in that** the ring gear (12) is at least indirectly connected, on the side of the planetary gearing facing away from the hydrodynamic converter (20), to the output shaft (6).

6. The device (1) according to one of Claims 1 to 5, **characterized in that** the ring gear (12), the planet gears (15), and the sun wheel (13) are embodied as singly helically geared.

7. The device (1) according to one of Claims 1 to 6, **characterized in that** the drive assembly (2) is implemented as an electric motor.

8. The device (1) according to one of Claims 1 to 7, **characterized in that** the work machine (3) is implemented as a conveyor apparatus for a fluid, in particular as a compressor, pump, or centrifugal pump.

## Revendications

1. Dispositif (1) pour la transmission de force avec un arbre d'entrée (4) relié au moins indirectement avec un groupe moteur (2) à vitesse de rotation constante, avec un arbre de sortie (6) relié au moins indirectement à une machine productrice de travail (3) à vitesse de rotation variable, avec
un convertisseur hydrodynamique (20) et avec
un réducteur différentiel conformé comme un train planétaire (11), comprenant unecouronne de train planétaire (12), une roue solaire (13) et une cage de transmission
planétaire (14) avec plusieurs satellites (15) formant des éléments du train planétaire (11),
dans lequel
l'arbre d'entrée (4) est directement relié à une roue de pompe (7) du convertisseur hydrodynamique (20) et à un premier élément (14) du train planétaire (11),
une roue de turbine (10) du convertisseur hydrodynamique (20) est reliée directement à
un deuxième élément (13) du train planétaire, et
l'arbre de sortie (6) est relié à un troisième élément (12) du train planétaire (11), **caractérisé en ce que**
le convertisseur hydrodynamique (20) est conformé comme un convertisseur à mouvement contraire et **en ce que**
le premier élément est la cage de transmission planétaire (14) du train planétaire (11), le deuxième élément est la roue solaire (13) du train planétaire (11) et le troisième élément est la couronne de train planétaire (12) du train planétaire (11).

2. Dispositif (1) selon la revendication 1, **caractérisé en ce qu'**il est prévu exactement un train planétaire (11).

3. Dispositif (1) selon la revendication 1 ou 2, **caractérisé en ce qu'**un engrenage (5) est prévu entre le train planétaire (11) et la machine productrice de travail (3).

4. Dispositif (1) selon l'une des revendications 1 à 3, **caractérisé en ce que** la roue de turbine (10) est reliée par un arbre creux (16) à la roue solaire (13) et l'arbre d'entrée (4) passant à travers l'arbre creux (16) est relié avec le cage de transmission planétaire (14) sur le côté du train planétaire (11) opposé au convertisseur hydrodynamique (20).

5. Dispositif (1) selon l'une des revendications 1 à 4, **caractérisé en ce que** la couronne de train planétaire (12) est reliée au moins indirectement à l'arbre de sortie (6) sur le côté du train planétaire opposé au convertisseur hydrodynamique (20).

6. Dispositif (1) selon l'une des revendications 1 à 5, **caractérisé en ce que** la couronne de train planétaire (12), les satellites (15) et la roue solaire (13) sont réalisées avec une denture oblique simple.

7. Dispositif (1) selon l'une des revendications 1 à 6, **caractérisé en ce que** le groupe moteur (2) est réalisé comme un moteur électrique.

8. Dispositif (1) selon l'une des revendications 1 à 7, **caractérisé en ce que** la machine productrice de travail (3) est réalisée comme un circuit de transport d'un fluide, en particulier comme un compresseur, une pompe ou une pompe centrifuge.
